# EUROPÄISCHE PATENTSCHRIFT

(11) **EP 0 799 671 B1**
(45) Veröffentlichungstag und Bekanntmachung des Hinweises auf die Patenterteilung: **02.06.1999**
(21) Anmeldenummer: 96105308.9
(22) Anmeldetag: 03.04.1996
(51) Int. Cl.: B23Q 5/04, B23Q 37/00

(54) **Bohr- und/oder Fräsmaschine**
Boring and/or milling machine
Machine foreuse et/ou fraiseuse

(43) Veröffentlichungstag der Anmeldung: 08.10.1997
(73) Patentinhaber: MASCHINENFABRIK BERTHOLD HERMLE AKTIENGESELLSCHAFT, D-78559 Gosheim (DE)
(72) Erfinder: Braun, Hans-Dieter, D-78665 Frittlingen (DE)
(74) Vertreter: Vetter, Hans, Dipl.-Phys. Dr.

(56) Entgegenhaltungen:
- DE-A- 4 402 084
- GB-A- 885 792
- US-A- 3 762 272
- US-A- 4 358 228

## Beschreibung

Die Erfindung betrifft eine Bohr- und/oder Fräsmaschine mit einem an einem Traggehäuse schwenkbar angeordneten, eine Arbeitsspindel aufweisenden Bearbeitungskopf, wobei eine Antriebswelle im Traggehäuse über ein Kegelradgetriebe im Bearbeitungskopf die Arbeitsspindel antreibt und die Drehachse der Antriebswelle die Schwenkachse für den Bearbeitungskopf bildet.

Durch die Schwenkbewegung ist eine Horizontal- und eine Vertikalbearbeitung mit einem einzigen Bearbeitungskopf bekannt, wobei eine derartige Maschine bereits aus der DE 44 02 084 bekannt ist. Bei der bekannten Maschine ist die Antriebs- und Schwenkachse um einen Winkel von 45° zur Horizontalen geneigt, und bei einer Umschaltung von der Horizontal- zur Vertikalbearbeitung ist eine Schwenkbewegung von 180° erforderlich. Durch die erforderliche Umsetzung der Antriebsbewegung von einer um 45° geneigten Achse auf eine vertikale bzw. horizontale Achse und durch die erforderliche große Schwenkbewegung wird der bekannte Bearbeitungskopf voluminös und kostenaufwendig. Darüber hinaus ist bei der Horizontalbearbeitung das Werkzeug hinter dem Werkstück angeordnet, was eine Beobachtung des Arbeitsvorgangs und manuelle Eingriffe erschwert. Ein weiterer Nachteil ist der vom Prinzip her relativ labile Aufbau, da die Spann- und Positionsfläche relativ weit vom Werkzeug entfernt ist. Um die notwendige Präzision zu erreichen, ist daher ein großer konstruktiver Aufbau erforderlich, der entsprechend kostenaufwendig ist.

Aus der Zeitschrift "Industriethemen", 3/89, S. 17, ist eine Fräsmaschine mit zwei Bearbeitungsköpfen bekannt, von denen der eine mit horizontaler Spindelachse an einem Horizontalschlitten und der zweite mit vertikaler Spindelachse an einem weiteren Schlitten mit geneigter Führungsbahn angeordnet ist, wobei der zweite Schlitten am ersten Schlitten geführt ist, so daß er aus seiner Arbeitsposition herausgefahren werden kann und dabei den ersten Bearbeitungskopf freigibt. Der Bearbeitungskopf mit vertikaler Spindelachse muß relativ weit nach vorne und nach oben bewegt werden, um den anderen Bearbeitungskopf zu überfahren. Hierdurch wird nicht nur die Bauhöhe sehr groß, sondern die Umschaltung zwischen Vertikal- und Horizontalbearbeitung dauert relativ lange und der jeweils nicht im Einsatz befindliche Bearbeitungskopf ist den anfallenden Spänen ausgesetzt.

Eine Aufgabe der vorliegenden Erfindung besteht nunmehr darin, eine Horizontal- und eine Vertikalbearbeitung mit einer einzigen Spindel durchzuführen, wobei bei einer Umschaltung zwischen dem Horizontal- und Vertikalbetrieb möglichst geringe Bewegungen erforderlich sind.

Diese Aufgabe wird erfindungsgemäß dadurch gelöst, daß die Drehachse der Arbeitsspindel senkrecht zur Drehachse der Antriebswelle und seitlich versetzt so zu dieser angeordnet ist, daß der werkzeugseitige Endbereich der Arbeitsspindel in der vertikalen und horizontalen Schwenkposition im wesentlichen dieselbe Höhe aufweist.

Bei der erfindungsgemäßen Bohr- und/oder Fräsmaschine muß der Bearbeitungskopf bei der Umstellung zwischen der Vertikal- und der Horizontalbearbeitung lediglich einen Schwenkvorgang von 90° durchführen. Die dabei erforderliche Höhenkorrektur des Werkzeugs ist sehr gering, so daß insgesamt sehr geringe und damit schnelle Bewegungen möglich sind. Bei der Horizontalbearbeitung ist die Arbeitsspindel und damit das Werkzeug von der Bedienperson aus gesehen seitlich des Werkstücks angeordnet, so daß eine gute Beobachtung des Arbeitsvorgangs und damit manuelle Eingriffe und Bedienungsvorgänge leicht möglich sind. Durch Einstellung von Zwischenpositionen innerhalb des 90°-Schwenkbereichs können auch leicht Schrägbohrungen durchgeführt werden. Durch den günstigen Kraftfluß im Bearbeitungskopf bleibt auch bei großer Bearbeitungspräzision der konstruktive Aufwand relativ gering und damit kostengünstig. Die geringe erforderliche Schwenkbewegung des Bearbeitungskopfes erlaubt eine sehr kleinvolumige Bauweise und eine gute Ausnutzung der räumlichen Gegebenheiten.

Durch die in den Unteransprüchen aufgeführten Maßnahmen sind vorteilhafte Weiterbildungen und Verbesserungen der im Anspruch 1 angegebenen Bohr- und/oder Fräsmaschine möglich.

Die Antriebswelle ist zweckmäßigerweise horizontal angeordnet, wie dies bei vielen Maschinen ohnehin in der Grundkonzeption realisiert ist.

Das Kegelradgetriebe besteht insbesondere aus zwei Kegelrädern, von denen das erste an der Antriebswelle und das zweite an einer im Bearbeitungskopf drehbar gelagerten, parallel zur Arbeitsspindel angeordnete Zwischenwelle angeordnet ist, wobei die Zwischenwelle über Antriebselemente die Arbeitsspindel antreibt. Hierdurch kann auf einfache Weise der erforderliche seitliche Versatz der Arbeitsspindel realisiert werden, wobei diese dann auch seitlich an der Antriebswelle vorbeigeführt werden kann. Die Drehachse der Zwischenwelle und der Arbeitsspindel sind dabei zweckmäßigerweise in einer senkrecht zur Drehachse der Antriebswelle verlaufenden Ebene angeordnet.

Als Antriebselemente zwischen der Arbeitsspindel und der Zwischenwelle eignen sich insbesondere Zahnräder, wobei diese in vorteilhafter Weise ein wenigstens zweistufiges Getriebe bilden können, so daß dann ein ansonsten erforderliches Getriebe im Traggehäuse entfallen kann.

Eine vorteilhafte Ausführung eines solchen Getriebes besteht darin, daß wenigstens zwei unterschiedliche Zahnräder an der Zwischenwelle längsverschiebbar und drehfest angeordnet sind, wobei in unterschiedlichen Längspositionen jeweils ein Zahneingriff mit einem entsprechenden Zahnrad an der Arbeitsspindel stattfindet. Die Getriebeumschaltung kann dadurch in einfacher Weise durch eine Längsverschiebung der Zahnräder an der Zwischenwelle erfolgen.

Durch eine drehbare Lagerung eines Spindelteils in einer im Bearbeitungskopf längsverschiebbar geführten Pinole wird eine Vorschubspindel gebildet, durch die die Arbeitsspindel in allen Bearbeitungspositionen einen Vorschub in ihrer Längsrichtung ausführen kann. Dies ist insbesondere bei der Ausführung von schrägen Bohrungen, beim Aushonen von Bohrungen und als Mittel zur Werkzeugverlängerung von großem Vorteil, um tiefer liegende Fräsebenen auf einfache Weise zu erreichen. Die Pinole weist dazu vorzugsweise eine manuelle Längsverstellung auf, jedoch kann diese Längsverstellung auch motorisch erfolgen.

An der Anschlagposition der Pinole im Inneren des Bearbeitungskopfes ist in vorteilhafter Weise eine Anschlagfederung vorgesehen, um die Arbeitsspindel bei ungewollten Krafteinwirkungen in der Längsrichtung zu schützen.

Die Arbeitsspindel ist außerhalb der Pinole längsverschiebbar und drehfest in einer drehbar im Bearbeitungskopf gelagerten Antriebshülse geführt, wobei zur drehfesten Führung die Antriebshülse und ein längsverschiebbar darin geführtes Führungselement jeweils eine Längsverzahnung besitzen. Hierdurch kann die Arbeitsspindel trotz ihrer Längsverschiebbarkeit leicht über die Antriebshülse in eine Drehbewegung versetzt werden. Hierzu ist die Antriebshülse mit wenigstens einem konzentrischen Antriebszahnrad für die Arbeitsspindel starr verbunden.

Zur variablen Bearbeitung von Werkstücken ist das Traggehäuse für den Bearbeitungskopf zweckmäßigerweise an einer Führungseinrichtung zur Verstellung in der X- und Y-Richtung in der horizontalen Ebene angeordnet, und ein Werkstücktisch ist vertikal verstellbar ausgebildet, um eine Bewegung in der Z-Richtung zu realisieren.

Zwei Ausführungsbeispiele der Erfindung sind in der Zeichnung dargestellt und in der nachfolgenden Beschreibung näher erläutert. Es zeigen:
- Figur 1: eine Vertikalschnittdarstellung eines Bearbeitungskopfes mit zweistufigem Getriebe als erstes Ausführungsbeispiel der Erfindung,
- Figur 2: eine weitere Vertikalschnittdarstellung des in Figur 1 dargestellten Bearbeitungskopfes gemäß der Schnittlinie A-B,
- Figur 3: eine Vertikalschnittdarstellung eines weiteren Bearbeitungskopfes als zweites Ausführungsbeispiel, bei dem das zweistufige Getriebe durch eine einfache Zahnradübersetzung ersetzt ist, und
- Figur 4: eine Vorderansicht einer mit einem derartigen Bearbeitungskopf versehenen Bohr- und/oder Fräsmaschine.

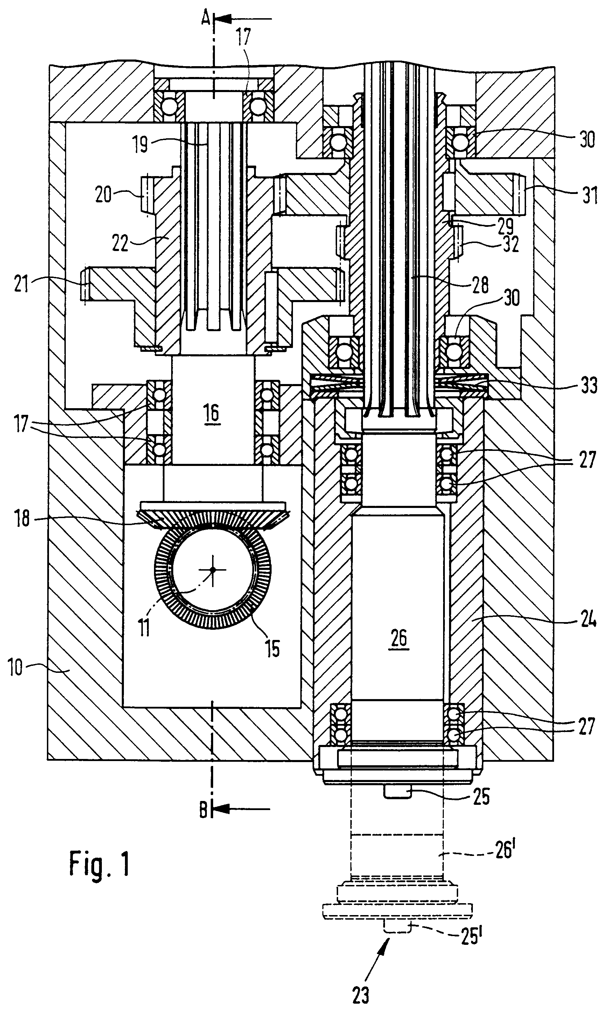

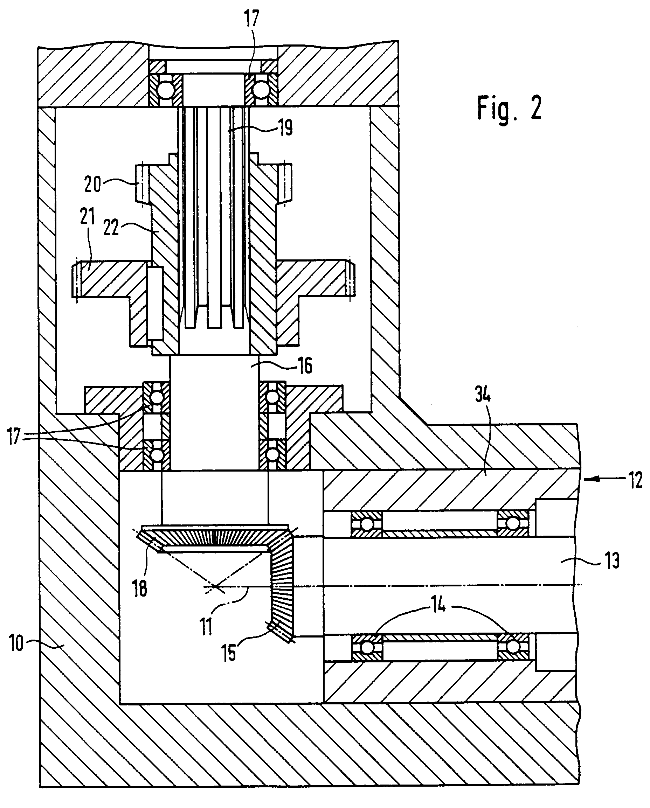

Gemäß dem in den Figuren 1 und 2 dargestellten ersten Ausführungsbeispiel ist ein Bearbeitungskopf 10 um eine horizontale Achse 11 schwenkbar an einem Traggehäuse 12 gelagert, wobei der obere Bereich des Bearbeitungskopfes 10 zur Vereinfachung nicht dargestellt ist und wobei vom Traggehäuse 12 lediglich ein vorderer zylindrischer in den Bearbeitungskopf 10 eingreifender Bereich dargestellt ist.

Im Traggehäuse 12 ist eine Antriebswelle 13 mittels Lagern 14 drehbar gelagert und trägt an ihrem bearbeitungskopfseitigen Ende ein Kegelzahnrad 15, das ins Innere des Bearbeitungskopfes 10 hineinragt. Dort ist eine Zwischenwelle 16 senkrecht zur Antriebswelle 13 durch Lager 17 drehbar gelagert und nimmt in der in den Figuren 1 und 2 dargestellten vertikalen Arbeitsposition eine vertikale Lage ein. Am unteren Ende trägt die Zwischenwelle 16 ein zweites Kegelzahnrad 18, das ins erste Kegelzahnrad 15 eingreift, so daß die Antriebswelle 13 über das aus den beiden Kegelzahnrädern 15, 18 bestehende Kegelradgetriebe die Zwischenwelle 16 antreibt.

Der obere, vom Kegelzahnrad 18 entfernte Bereich der Zwischenwelle 16 ist mit einer Längsverzahnung 19 versehen, wobei ein aus zwei starr miteinander verbundenen Zahnräder 20, 21 bestehendes Getriebeglied 22 eine entsprechende Längsverzahnung an seiner Durchgangsbohrung aufweist, so daß es in der Längsrichtung der Zwischenwelle 16 entlang dieser verschiebbar ist.

Parallel zur Zwischenwelle 16 ist im Bearbeitungskopf 10 eine Arbeitsspindel 23 drehbar gelagert. Die beiden Längsachsen der Zwischenwelle 16 und der Arbeitsspindel 23 sind dabei in einer Ebene angeordnet, die senkrecht zur Längsachse der Antriebswelle 13 ausgerichtet ist. Die Arbeitsspindel 23 besteht aus einer längsverschiebbar im Bearbeitungskopf 10 angeordneten Pinole 24, die eine zur Vereinfachung nicht dargestellte Längsverzahnung aufweist, um eine Drehbewegung zu verhindern. In dieser Pinole 24 ist ein mit einer Werkzeugaufnahme 25 versehenes Spindelteil 26 mittels Lagern 27 drehbar gelagert. Das Spindelteil 26 ist an seinem von der Werkzeugaufnahme 25 entfernten Endbereich mit einer Längsverzahnung 28 versehen, die in einer innen ebenfalls mit einer entsprechenden Längsverzahnung versehenen Antriebshülse 29 längsverschiebbar geführt ist. Die Antriebshülse 29 ist ihrerseits mittels Lagern 30 im Bearbeitungskopf 10 drehbar, jedoch nicht längsverschiebbar gelagert. Die Antriebshülse 29 trägt an ihrer Außenseite zwei Zahnräder 31, 32, die drehfest mit der Antriebshülse 29 verbunden sind. In der in Figur 1 dargestellten Position greift das obere größere Zahnrad 31 in das kleinere Zahnrad 20 des Getriebeglieds 22 ein. Die beiden übrigen Zahnräder 32, 21 sind ohne Eingriff miteinander. Wird das Getriebeglied 22 nun nach oben verschoben, so gelangt das größere Zahnrad 21 des Getriebeglieds 22 in Eingriff mit dem kleineren Zahnrad 32 der Antriebshülse 29, während die übrigen Zahnräder 20, 31 nicht mehr im Eingriff sind. Auf diese Weise wird durch eine Längsverschiebung des Getriebeglieds 22 eine Umschaltung des durch das Getriebeglied 22 und die Antriebshülse 29 gebildeten zweistufigen Getriebes erreicht.

Durch die Längsverschiebbarkeit des mit einer Längsverzahnung 28 versehenen Spindelteils 26 in der Antriebshülse 29 und die Längsverschiebbarkeit der Pinole 24 im Bearbeitungskopf 10 kann das Spindelteil 26 zusammen mit der Pinole 24 in der Längsrichtung aus dem Bearbeitungskopf 10 herausbewegt werden, so daß das Spindelteil 26 beispielsweise die gestrichelt dargestellte Position 26' einnehmen kann. Diese Längsverschiebung kann manuell oder motorisch erfolgen, wobei die entsprechenden Antriebselemente in den Figuren 1 und 2 zur Vereinfachung nicht dargestellt sind. Ebenfalls nicht dargestellt ist ein Umschalthebel oder ein Umschaltmechanismus zur Getriebeumschaltung durch das Getriebeglied 22.

Bei der Bewegung der Pinole 24 in den Bearbeitungskopf 10 hinein gelangt sie an einen durch ein Federpaket 33 gebildeten Anschlag. Bei einer ungewollten Bewegung der Pinole 24 in den Bearbeitungskopf 10 hinein wird somit eine Beschädigung der Pinole und der Arbeitsspindel 23 insgesamt verhindert. Dies ist z. B. dann von Bedeutung, wenn der Bearbeitungskopf bei eingefahrener Arbeitsspindel 23 gegen ein Hindernis bewegt wird, so daß die Pinole 24 ins Innere des Bearbeitungskopfes 10 gedrückt wird.

Beim Verschwenken des Bearbeitungskopfes 10 aus der dargestellten vertikalen Position in die horizontale Arbeitsposition erfolgt eine Schwenkbewegung um die horizontale Schwenkachse 11 um 90°. Dabei dreht sich der rohrförmige bearbeitungskopfseitige Endbereich 34 des Traggehäuses 12 in einer entsprechenden Bohrung des Bearbeitungskopfes 10, und die Zahnungen der Kegelzahnräder 15, 18 bewegen sich in entsprechender Weise aneinander entlang. Die Schwenkachse des Bearbeitungskopfes 10 fällt mit der Antriebsachse der Antriebswelle 13 zusammen. Zur Fixierung des Bearbeitungskopfes 10 in seinen Endlagen oder auch Zwischenlagen dient eine nicht dargestellte Feststelleinrichtung, die in an sich bekannter Weise ausgebildet sein kann.

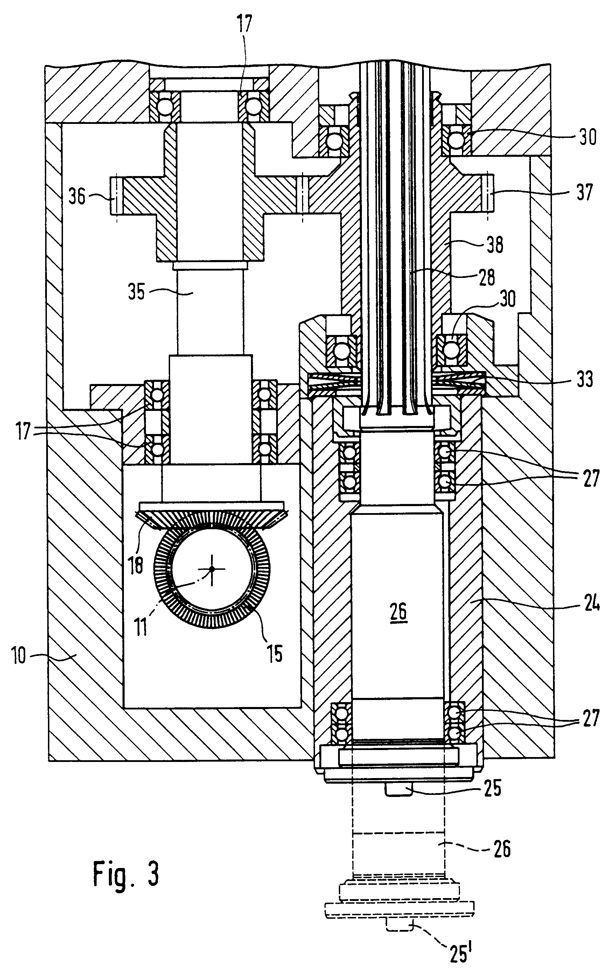

Das in Figur 3 dargestellte zweite Ausführungsbeispiel entspricht weitgehend dem ersten Ausführungsbeispiel, wie durch Vergleich der Figuren 1 und 3 deutlich wird. Gleiche oder gleichwirkende Bauteile sind daher mit denselben Bezugszeichen versehen und nicht nochmals beschrieben. Im Unterschied zum ersten Ausführungsbeispiel ist hier eine Zwischenwelle 35 ohne Längsverzahnung vorgesehen, die ein einziges, drehfest mit ihr verbundenes und nicht längsverschiebbares Zahnrad 36 trägt. Dieses Zahnrad 36 greift in ein einziges Zahnrad 37 einer modifizierten Antriebshülse 38 ein, in der - wie beim ersten Ausführungsbeispiel - die Längsverzahnung 28 des Spindelteils 26 längsverschiebbar und drehfest geführt ist. Anstelle des zweistufigen Getriebes des ersten Ausführungsbeispiels tritt hier somit eine einfachere Zahnradübertragung mit festem Übertragungsverhältnis. Falls dennoch ein Getriebe erforderlich ist, kann ein solches im Antriebsstrang im Traggehäuse 12 angeordnet sein.

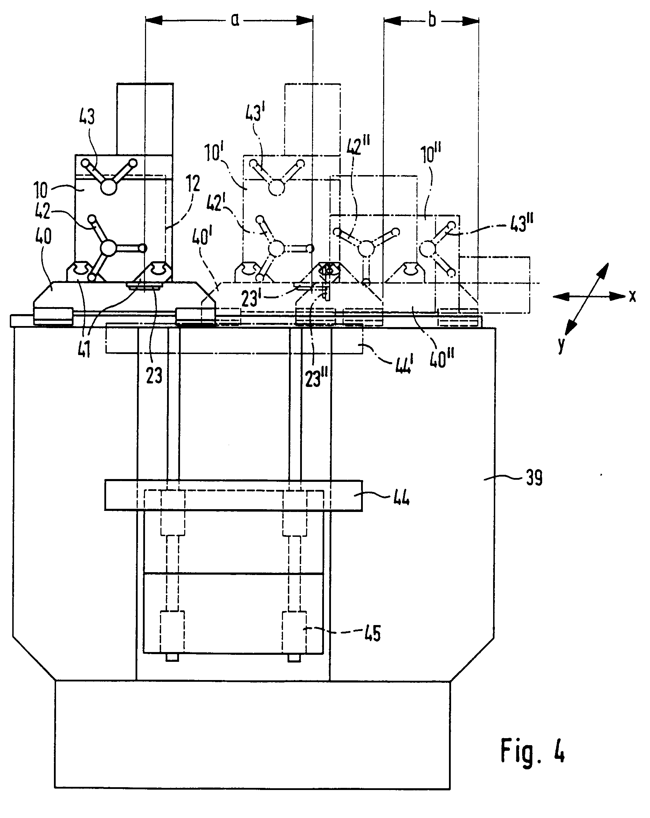

In Figur 4 ist die gesamte Bohr- und/oder Fräsmaschine dargestellt. Auf einem Grundgestell 39 ist ein Schlitten 40 in der X-Richtung horizontal quer zur Bildebene verschiebbar geführt, beispielsweise durch eine Positionierantrieb. Auf diesem Schlitten 40 ist das Traggehäuse 12 an zwei Schienen 41 in der horizontalen Y-Richtung, die senkrecht zur X-Richtung verläuft, verschiebbar geführt, beispielsweise ebenfalls durch einen Positionierantrieb. Der am Traggehäuse 12 schwenkbar gemäß den Figuren 1 und 3 angeordnete Bearbeitungskopf 10 trägt eine manuelle Verstelleinrichtung 42 zur Längsverschiebung der Arbeitsspindel 23 sowie einen Einstellhebel 43 zur Getriebeumschaltung gemäß den Figuren 1 und 2. Bei einer Ausführung gemäß Figur 3 kann dieser Einstellhebel 43 entfallen.

Weiterhin ist am Grundgestell 39 ein horizontaler Werkstücktisch 44 höhenverstellbar angeordnet, wobei mit dem Bezugszeichen 44' die hochgefahrene obere Position strichpunktiert dargestellt ist. Zur Höheneinstellung des Werkstücktisches 44 dient ein Positionierantrieb 45. Zur vertikalen Bearbeitung von Werkstücken kann der Schlitten 40 zwischen seiner linken Position und seiner rechten Position, in der er das Bezugszeichen 40' trägt, um den Verstellweg a verfahren werden. Der Schlitten 40' in seiner rechten Position ist gestrichelt dargestellt. Soll nun ausgehend von der rechten Position eine Horizontalbearbeitung erfolgen, so wird der Schlitten 40 um eine weitere Strecke b nach rechts verschoben, wobei dann der Bearbeitungskopf 10 in die horizontale Bearbeitungsposition geschwenkt wird, in der er mit dem Bezugszeichen 10'' versehen ist. Die Werkzeugaufnahme 25 der Arbeitsspindel 23 bleibt dadurch im wesentlichen unverändert, insbesondere Bezüglich der Höhenposition. Beim Verfahren um die Wegstrecke b in die äußerste rechte Position kann noch ein Werkzeugwechsel mit Hilfe eines dort nicht dargestellten Tellerwerkzeugmagazins in die vertikal positionierte Arbeitsspindel erfolgen.

## Patentansprüche

1. Bohr- und/oder Fräsmaschine mit einem an einem Traggehäuse schwenkbar angeordneten, eine Arbeitsspindel (23) aufweisenden Bearbeitungskopf (10), wobei eine Antriebswelle (13) im Traggehäuse über ein Kegelradgetriebe im Bearbeitungskopf (10) die Arbeitsspindel (23) antreibt und die Drehachse der Antriebswelle (13) die Schwenkachse für den Bearbeitungskopf (10) bildet, dadurch gekennzeichnet, daß die Drehachse der Arbeitsspindel (23) senkrecht zur Drehachse (11) der Antriebswelle (13) und seitlich versetzt so zu dieser angeordnet ist, daß der werkzeugseitige Endbereich der Arbeitsspindel (23) in der vertikalen und horizontalen Schwenkposition im wesentlichen dieselbe Höhenposition aufweist.

2. Maschine nach Anspruch 1, dadurch gekennzeichnet, daß die Antriebswelle (13) horizontal angeordnet ist.

3. Maschine nach Anspruch 1 oder 2, dadurch gekennzeichnet, daß das Kegelradgetriebe aus zwei Kegelzahnrädern (15, 18) besteht, von denen das erste (15) an der Antriebswelle (13) und das zweite (18) an einer im Bearbeitungskopf (10) drehbar gelagerten, parallel zur Arbeitsspindel (23) angeordneten Zwischenwelle (16; 35) angeordnet ist, und daß die Zwischenwelle (16; 35) über Antriebselemente die Arbeitsspindel (23) antreibt.

4. Maschine nach Anspruch 3, dadurch gekennzeichnet, daß die Drehachsen der Zwischenwelle (16; 35) und der Arbeitsspindel (23) in einer senkrecht zur Drehachse (11) der Antriebswelle (13) verlaufenden Ebene angeordnet sind.

5. Maschine nach Anspruch 3 oder 4, dadurch gekennzeichnet, daß die Antriebselemente Zahnräder (20, 21, 31, 32; 36, 37) sind.

6. Maschine nach Anspruch 5, dadurch gekennzeichnet, daß die Zahnräder (20, 21, 31, 32) ein wenigstens zweistufiges Getriebe bilden.

7. Maschine nach Anspruch 6, dadurch gekennzeichnet, daß wenigstens zwei unterschiedliche Zahnräder (20, 21) an der Zwischenwelle (16) längsverschiebbar und drehfest angeordnet sind, wobei in unterschiedlichen Längspositionen jeweils ein Zahneingriff mit einem entsprechenden Zahnrad (31, 32) an der Arbeitsspindel (23) stattfindet.

8. Maschine nach einem der vorhergehenden Ansprüche, dadurch gekennzeichnet, daß die Arbeitsspindel (23) ein drehbar in einer im Bearbeitungskopf (10) längsverschiebbar geführten Pinole (24) gelagertes Spindelteil (26) aufweist.

9. Maschine nach Anspruch 8, dadurch gekennzeichnet, daß die Pinole (24) eine manuelle Längsverstellung (42) aufweist.

10. Maschine nach Anspruch 8 oder 9, dadurch gekennzeichnet, daß an der Anschlagposition der Pinole (24) im Innern des Bearbeitungskopfes (10) eine Anschlagfederung (33) vorgesehen ist.

11. Maschine nach einem der Ansprüche 8 bis 10, dadurch gekennzeichnet, daß das Spindelteil (26) außerhalb der Pinole längsverschiebbar und drehfest in einer drehbar im Bearbeitungskopf (10) gelagerten Antriebshülse (29; 38) geführt ist.

12. Maschine nach Anspruch 11, dadurch gekennzeichnet, daß die Antriebshülse (29; 38) und ein längsverschiebbar darin geführtes Führungselement des Spindelteils (26) eine Längsverzahnung (28) besitzen.

13. Maschine nach Anspruch 11 oder 12, dadurch gekennzeichnet, daß die Antriebshülse (29; 38) mit wenigstens einem konzentrischen Antriebszahnrad (31, 32; 37) für die Arbeitsspindel (23) starr verbunden ist.

14. Maschine nach einem der vorhergehenden Ansprüche, dadurch gekennzeichnet, daß das Traggehäuse (12) für den Bearbeitungskopf (10) an einer Führungseinrichtung (40, 41) zur Positionierung in der X- und Y-Richtung in der horizontalen Ebene angeordnet ist, und daß ein Werkstücktisch (44) vertikal positionierbar ausgebildet ist.

## Claims

1. Drilling and/or milling machine with a machining head (10) with a work spindle (23) pivotably mounted on a support housing, wherein a drive shaft (13) in the support housing drives the work spindle (23) via a bevel gearing in the machining head (10), and the rotary axis of the drive shaft (13) forms the swivel axis for the machining head (10), characterized in that the rotary axis of the work spindle (23) is mounted at right-angles to the rotary axis (11) of the drive shaft (13) and is so offset to the side of the latter that the tool-side end section of the work spindle (23) has essentially the same vertical position in the vertical and horizontal swivel positions.

2. Machine according to claim 1, characterized in that the drive shaft (13) is mounted horizontally.

3. Machine according to claim 1 or 2, characterized in that the bevel gearing is comprised of two bevel gears (15, 18), of which the first (15) is mounted on the drive shaft (13) and the second (18) on an intermediate shaft (16; 35) which is pivotably mounted in the machining head (10) parallel to the work spindle (23), and that the intermediate shaft (16; 35) drives the work spindle (23) via drive elements.

4. Machine according to claim 3, characterized in that the rotary axes of the intermediate shaft (16; 35) and the work spindle (23) are arranged in a plane running at right-angles to the rotary axis (11) of the drive shaft (13).

5. Machine according to claim 3 or 4, characterized in that the drive elements are gears (20, 21, 31, 32; 36, 37).

6. Machine according to claim 5, characterized in that the gears (20, 21, 31, 32) form a gearing with at least two steps.

7. Machine according to claim 6, characterized in that at least two different gears (20, 21) are mounted non-rotatably on the intermediate shaft (16) so as to be capable of longitudinal movement wherein, in various longitudinal positions, they mesh with a corresponding gear (31, 32) on the work spindle (23).

8. Machine according to any of the preceding claims, characterized in that the work spindle (23) has a spindle section (26) pivotably mounted in a quill (24) which is guided with longitudinal movement facility in the machining head (10).

9. Machine according to claim 8, characterized in that the quill (24) has a manual longitudinal adjuster (42).

10. Machine according to claim 8 or 9, characterized in that a stop spring (33) is provided at the stop position of the quill (24) inside the machining head (10).

11. Machine according to any of claims 8 to 10, characterized in that the spindle section (26) is guided non-rotatably and with longitudinal movement facility outside the quill in a driving sleeve (29; 38) mounted pivotably in the machining head (10).

12. Machine according to claim 11, characterized in that the driving sleeve (29; 38) and a guide element of the spindle section (26) guided in the former with longitudinal movement capability have a longitudinal tooth system (28).

13. Machine according to claim 11 or 12, characterized in that the driving sleeve (29; 38) is linked rigidly to one or more concentric driving gears (31, 32; 37) for the work spindle (23).

14. Machine according to any of the preceding claims, characterized in that the support housing (12) for the machining head (10) is mounted on a guide unit (40, 41) for positioning in the X and Y directions in the horizontal plane, and that a worktable (44) is designed with a vertical positioning facility.

## Revendications

1. Machine à forer et/ou à fraiser comportant une tête d'usinage (10) montée pivotante sur un boîtier de support et présentant une broche de travail (23), un arbre d'entraînement (13) entraînant la broche de travail (23) dans le boîtier de support, par l'intermédiaire d'une transmission à engrenages coniques dans la tête d'usinage (10) et l'axe de rotation de l'arbre d'entraînement (13) constituant l'axe de pivotement pour la tête d'usinage (10), caractérisée en ce que l'axe de rotation de la broche de travail (23) est perpendiculaire à l'axe de rotation (11) de l'arbre d'entraînement (13) et est décalé latéralement par rapport à celui-ci de manière que la zone terminale côté outil de la broche de travail (23) présente essentiellement la même position en hauteur dans la position de pivotement vertical et horizontal.

2. Machine selon la revendication 1, caractérisée en ce que l'arbre d'entraînement (13) est monté horizontalement.

3. Machine selon la revendication 1 ou 2, caractérisée en ce que la transmission à engrenages coniques est constituée de deux roues dentées coniques (15, 18), dont la première (15) est montée sur l'arbre d'entraînement (13) et la deuxième (18) sur un arbre intermédiaire (16; 35) monté tournant dans la tête d'usinage (10), parallèlement à la broche d'entraînement (23) et en ce que l'arbre intermédiaire (16; 35) entraîne la broche de travail (23) par des éléments d'entraînement.

4. Machine selon la revendication 3, caractérisée en ce que les axes de rotation de l'arbre intermédiaire (16; 35) et de la broche de travail (23) sont disposés dans un plan perpendiculaire à l'axe de rotation (11) de l'arbre d'entraînement (13).

5. Machine selon la revendication 3 ou 4, caractérisée en ce que les éléments d'entraînement sont des roues dentées (20, 21, 31, 32; 36, 37).

6. Machine selon la revendication 5, caractérisée en ce que les roues dentées (20, 21, 31, 32) forment une transmission à au moins deux étages.

7. Machine selon la revendication 6, caractérisée en ce qu'au moins deux roues dentées (20, 21) différentes sont montées sur l'arbre intermédiaire (16) de manière à pouvoir coulisser longitudinalement et solidairement en rotation, un engrènement avec une roue dentée (31, 32) correspondante ayant lieu sur la broche de travail (23) dans différentes positions longitudinales.

8. Machine selon l'une des revendications précédentes, caractérisée en ce que la broche de travail (23) comporte une partie de broche (26) montée tournante dans une douille (24) guidée à coulissement longitudinal dans la tête d'usinage (10).

9. Machine selon la revendication 8, caractérisée en ce que la douille (24) présente un réglage longitudinal (42) manuel.

10. Machine selon la revendication 8 ou 9, caractérisée en ce qu'une suspension élastique de butée (33) est prévue à la position de butée de la douille (24), à l'intérieur de la tête d'usinage (10).

11. Machine selon l'une des revendications 8 à 10, caractérisée en ce que la partie de broche (26) est guidée, à l'extérieur de la douille, à coulissement longitudinal et solidairement en rotation dans une douille d'entraînement (29; 38) montée tournante dans la tête d'usinage (10).

12. Machine selon la revendication 11, caractérisée en ce que la douille d'entraînement (29; 38) et un élément de guidage de la partie de broche (26), guidé à l'intérieur de celle-ci de manière à pouvoir coulisser longitudinalement, présentent une denture longitudinale (28).

13. Machine selon la revendication 11 ou 12, caractérisée en ce que la douille d'entraînement (29; 38) est reliée rigidement à au moins une roue dentée d'entraînement (31, 32; 37) concentrique, pour la broche de travail (23).

14. Machine selon l'une des revendications précédentes, caractérisée en ce que le boîtier de support (12) pour la tête d'usinage (10) est monté sur un dispositif de guidage (40, 41) en vue du positionnement dans la direction X et la direction Y dans le plan horizontal, et en ce qu'une table porte-pièce (44) est réalisée positionnable verticalement.
